# EUROPEAN PATENT SPECIFICATION

(11) **EP 4 531 312 B1**
(45) Date of publication and mention of the grant of the patent: **29.07.2026**
(21) Application number: 24197828.7
(22) Date of filing: 02.09.2024
(51) Int. Cl.: H04J 3/06, G06F 1/04, B60W 50/02, F02D 41/26, G05B 19/042

(54) **METHOD FOR ENGINE CONTROL AND MONITORING SYSTEM**
VERFAHREN ZUR MOTORSTEUERUNG UND ÜBERWACHUNGSSYSTEM
PROCÉDÉ DE COMMANDE ET DE SURVEILLANCE DE MOTEUR

(30) Priority: 27.09.2023 GB 202314804
(43) Date of publication of application: 02.04.2025
(73) Proprietor: Rolls-Royce plc, London N1 9FX (GB)
(72) Inventor: Griffiths, Stuart A, Derby, DE24 8BJ (GB); Ahmed, Saim, Derby, DE24 8BJ (GB)
(74) Representative: Rolls-Royce plc

(56) References cited:
- EP-A1- 2 544 388
- US-A1- 2005 027 404
- US-A1- 2009 292 434
- US-A1- 2011 320 079
- YUICHI ITAMI ET AL: "A Distributed Computing Environment for Embedded Control Systems with Time-Triggered and Event-Triggered Processing", EMBEDDED AND REAL-TIME COMPUTING SYSTEMS AND APPLICATIONS, 2008. RTCSA '08. 14TH IEEE INTERNATIONAL CONFERENCE ON, IEEE, PISCATAWAY, NJ, USA, 25 August 2008 (2008-08-25), pages 45 - 54, XP031315664, ISBN: 978-0-7695-3349-0
- KRAMER T ET AL: "New Functions, New Sensors, New Architectures ? How to Cope with the Real-Time Requirements", pages 1 - 9, XP002583703, Retrieved from the Internet <URL:http://www.inchron.com/fileadmin/INCHRON/3-PDFs/EN/AMAA_09_INCHRON_Manuscript_sent.pdf> [retrieved on 20090501]

## Description

### TECHNICAL FIELD

The present disclosure relates to a synchronisation method for an Engine Control and Monitoring System (ECaMS) for an engine, in particular a method for synchronising processor nodes of an ECaMS.

### BACKGROUND

Most engines used in vehicles include systems to monitor engine performance and/or adjust parameters within the engine; these systems are commonly referred to as ECaMS systems. By way of example, ECaMS systems may be included in: aeronautical gas turbine engines; marine diesel engines; automotive petrol engines; marine gas turbine engines, and so on.

For more complex engines, and particularly where the continued performance of the engine without unscheduled interruptions or failures is safety critical, the ECaMS may comprise a Control and Optimising System (CnOS) and a Monitoring and Optimisation System (MnOS). Taking the example of an engine intended for use with an aeroplane (such as an aeronautical gas turbine engine) the CnOS may be used to control flight operations to regulate the engine performance in flight (by way of example, to adjust variable stator vanes angles or control fuel flow rates) and the MnOS may be used to store data for improving engine performance after flights, including data used to guide maintenance operation (for example fan balancing which typically requires adjusting screws in an engine). Further, where a CnOS and MnOS are both present in an ECaMS, the two systems may be effectively segregated from one another, such that engine control and engine protection functions do not interact and issues with (less critical) control systems are less likely to impact (more critical) protection systems. Segregation may include, for example, using separate physical sensors for the two systems, wherein the sensors may be located in similar locations. In some ECaMS, particularly those that use plural separate units some of which may be segregated from one another, the units may not necessarily operate using a universally agreed single clock source.

US2005/027404 relates to a control apparatus that is communicably coupled through an in-vehicle communication line to a device. The control apparatus is operative to control an equipment unit installed therein. In the control apparatus, a determining unit receives a request transmitted from the device. The request includes information related to the device and the control apparatus. The determining unit is configured to determine whether the received request corresponds to a previously specified request according to the information of the received request. A changing unit changes a way of transmitting response data against the received request according to a result of the determination, thereby increasing a first responsibility against the received request corresponding to the specified request, as compared with a second responsibility against the received request except for the specified request.

It is desirable to provide ECaMS having increased adaptability and versatility. Further, it is desirable to provide methods to allow synchronisation between processor nodes of ECaMS

### BRIEF SUMMARY

An embodiment provides a synchronisation method as claimed in claim 1.

In some embodiments, the synchronising of the first processor node and the second processor node may comprise, at the second processor node, comparing the first control cycle count received from the first processor node with the second control cycle count counted at the second processor node.
- If the first control cycle count is greater than the second control cycle count, the second control cycle count may be adjusted to match the first control cycle count and the second transmission slot index may be adjusted to match the first transmission slot index.
- If the first control cycle count is equal to the second control cycle count, the first transmission slot index may be compared to the second transmission slot index, and:
   i. if the first transmission slot index is higher than the second transmission slot index, the second transmission slot index may be adjusted to match the first transmission slot index; or
   ii. if the first transmission slot index is not higher than the second transmission slot index, the second transmission slot index may remain unadjusted.
- If the first control cycle count is less than the second control cycle count, the second control cycle count may remain unadjusted and the second transmission slot index may remain unadjusted.

In some embodiments the ECaMS may further comprise a third processor node and a fourth processor node: the third processor node comprising a third acquisition integrated circuit; and the fourth processor node comprising a fourth acquisition integrated circuit, wherein the first acquisition integrated circuit, second acquisition integrated circuit, third acquisition integrated circuit and fourth acquisition integrated circuit may be connected via a ring network, wherein the ring network is used to transmit the message from the first processor node to the second processor node. Each of the acquisition integrated circuits may count a control cycle count and store a transmission slot index and, in a clockwise operating mode, messages comprising the control cycle count and transmission slot index may be sent from the first acquisition integrated circuit to the second acquisition integrated circuit, from the second acquisition integrated circuit to the third acquisition integrated circuit, from the third acquisition integrated circuit to the fourth acquisition integrated circuit and, optionally, from the fourth acquisition integrated circuit to the first acquisition integrated circuit.

In some embodiments, the ring network may be a dual ring network comprising a clockwise ring and anticlockwise ring and wherein, in an anticlockwise operating mode, messages comprising the control cycle count and transmission slot index may be sent from the fourth acquisition integrated circuit to the third acquisition integrated circuit, from the third acquisition integrated circuit to the second acquisition integrated circuit, from the second acquisition integrated circuit to the first acquisition integrated circuit and, optionally, from the first acquisition integrated circuit to the fourth acquisition integrated circuit.

In some embodiments, the control cycle counts and transmission slot indexes of the acquisition integrated circuits may be set to zero when the ECaMS is reset. The ECaMS may be reset on activation and/or in the event of a processing issue in the ECaMS.

Methods according to some embodiments may be performed on ECaMS that are installed on engines. The engines may be aeronautical gas turbine engines; marine diesel engines; automotive petrol engines; or naval gas turbine engines.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### BRIEF DESCRIPTION OF DRAWINGS

Embodiments will now be described by way of example only, with reference to the Figures, in which:
Fig. 1 is a schematic diagram of an ECaMS for an engine, in accordance with embodiments;
Fig. 2 is an example of an engine in accordance with embodiments;
Fig. 3 is a schematic diagram of an ECaMS that includes a ring network, in accordance with embodiments;
Fig. 4 is a flowchart of a method in accordance with embodiments; and
Fig. 5 is a schematic diagram of connections within an ECaMS according to some embodiments.

### DETAILED DESCRIPTION

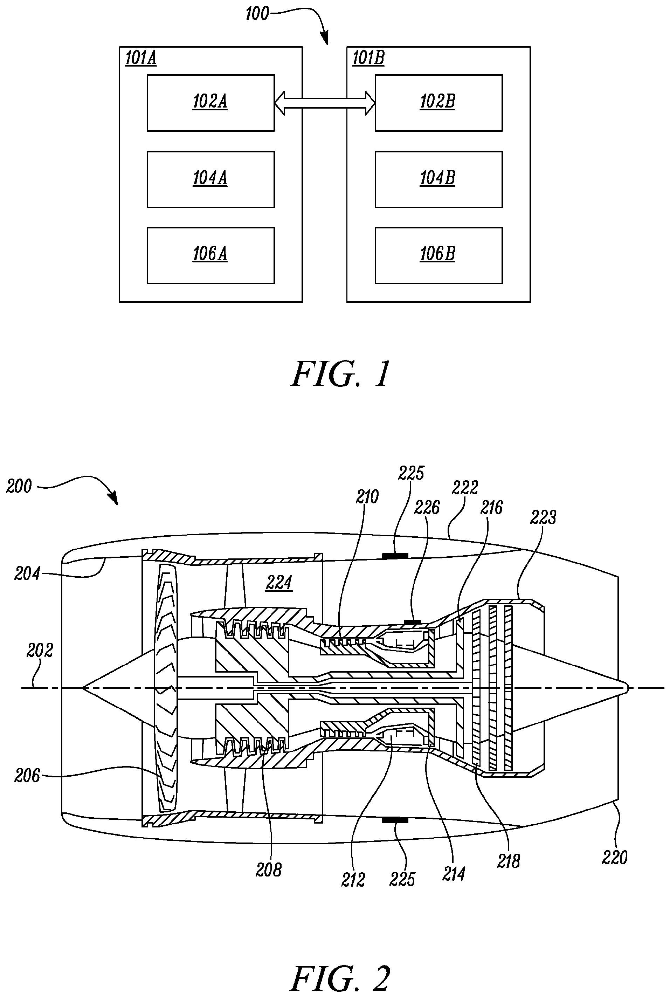

**Figure. 1** is a schematic diagram of an ECaMS 100 for an engine, in accordance with embodiments. As shown in Figure 1, the ECaMS includes a first processor node 101A and a second processor node 101B. The first processor node comprises a first acquisition integrated circuit (IC) 102A, a first output IC 104A and a first processor 106A. Equivalently, the second processor node 101B includes second acquisition IC 102B, output IC 104B and processor 106B. The first acquisition IC is connected directly to the second acquisition IC; this direct connection may comprise a wired connection, a wireless link or a combination of wired and wireless connection. In some embodiments, output ICs of the first and second processor nodes may also be directly connected. The ECaMS 100 as shown in Figure 1 uses what may be referred to as a distributed ECaMS architecture, in which the functions of the ECaMS are split across the processor nodes. The processors within a given processor node may be connected directly only to components within that processor node, for example, the acquisition IC and/or output IC, and may not have direct connections to components outside the processor node. The term "direct" is used when referring to connections between two given components to mean that the connection (which may be wired or wireless) does not include any further components other than those used to effect the connection such as wires, plugs, sockets, isolators, circuit conditioning components and lightning strike protection; that is, there are no further components located between the two given components that may receive, alter, and/or retransmit signals passing along the connection.

In some embodiments, the capabilities of the ECaMS as illustrated by Figure 1 may be altered (for example, expanded) as necessary depending on the requirements of the engine into which the ECaMS is installed. As a consequence of the direct connections between processor nodes being made via the acquisition ICs, rather than between the processors of the processor nodes, additional nodes can be added into the system to provide additional processing capability, I/O capability, and so on without requiring substantial software changes and with reduced rewiring. In embodiments, the ECaMS could be expanded by connection of one or more expansion units, for example further node(s) providing additional I/O capability or specific I/O capabilities as required for a particular implementation. It is desirable to support synchronisation between the processor nodes and additional nodes of the ECaMS.

Embodiments include methods performed on engines comprising ECaMS as discussed herein, for example: aeronautical gas turbine engines; marine diesel engines; automotive petrol engines; and/or marine gas turbine engines. **Figure 2** is an example of an engine 200 in accordance with embodiments that comprises turbines, specifically an aeronautical gas turbine engine. An ECaMS 225 in accordance with embodiments is installed in the example engine 200; where installed in an aeronautical engine, the ECaMS may be an Electrical Engine Controller (EEC). The ECaMS 225 shown in Figure 2 is connected to a sensor 226. The engine 200 may be associated with an aircraft (e.g. mounted thereon, or configured to be mounted thereon) and configured to generate propulsive thrust and/or electrical energy for the aircraft.

In the example, the engine 200 has a principal rotational axis 202. The engine 200 comprises, in axial flow series, an air intake 204, a propulsive fan 206, an intermediate pressure compressor 208, a high-pressure compressor 210, combustion equipment 212, a high-pressure turbine 214, an intermediate pressure turbine 216, a low-pressure turbine 218 and an exhaust nozzle 220. A nacelle 222 generally surrounds the engine 200 and defines both the intake 204 and the exhaust nozzle 220. An internal support structure 223 surrounds the fan 206, compressors 207, 210, combustion equipment 212, and turbines 214, 216, 218.

Briefly, the engine 200 operates as follows: air entering the intake 204 is accelerated by the fan 206 to produce two air flows: a first air flow which passes into the intermediate pressure compressor 208 and a second air flow which passes through a bypass duct 224 to provide propulsive thrust. The intermediate pressure compressor 208 compresses the air flow directed into it before delivering that air to the high-pressure compressor 210 where further compression takes place.

The compressed air exhausted from the high-pressure compressor 210 is directed into the combustion equipment 212 where it is mixed with fuel and the mixture combusted. The resultant hot combustion products then expand through, and thereby drive the high, intermediate and low-pressure turbines 214, 216, 218 before being exhausted through the nozzle 220 to provide additional propulsive thrust. The high 214, intermediate 216 and low 218 pressure turbines drive respectively the high-pressure compressor 210, intermediate pressure compressor 208 and fan 206, each by suitable interconnecting shaft.

The ECaMS may be installed, for example, within the nacelle 222 and may be used to control and monitor various characteristics of the engine. Due to the relatively high complexity of the engine shown in Figure 2, the ECaMS may comprise additional processor nodes beyond the two illustrated in Figure 1. It will be appreciated that the engine 200 illustrated in Fig. 2 is by way of example only, and various alternatives are within the scope of the present disclosure. Some less complex engines, for example automotive engines, may include ECaMS comprising smaller numbers of processor nodes than may be included in the engine of Figure 2.

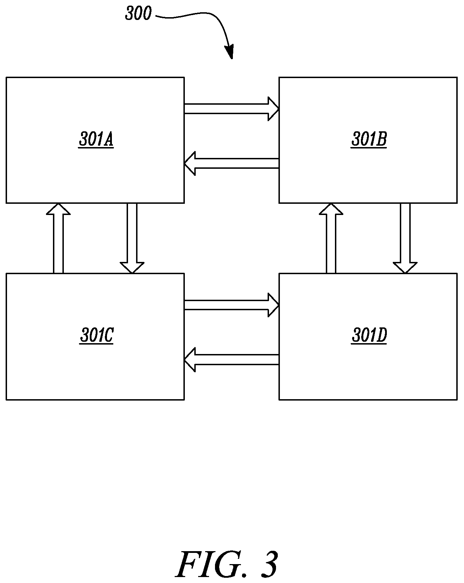

As discussed above, where the ECaMS includes first and second processor nodes, the acquisition ICs of the first and second processor nodes are connected directly to one another. In embodiments in which the ECaMS includes additional processor nodes (beyond the two processor nodes of the Figure 1 embodiment), additional connections are required between the processor nodes. Various schemes may be used for connecting plural processor nodes, for example, hub and spoke connection schemes. In some embodiments, the ECaMS may comprise a third processor node and a fourth processor node. The third processor node may comprise a third acquisition IC, a third output IC, and a third processor, and the fourth processor node may comprise a fourth acquisition IC, a fourth output IC, and a fourth processor. **Figure 3** is a schematic diagram showing an example ECaMS in which the ECaMS 300 includes a first processor node 301A, second processor node 301B, third processor node 301C and fourth processor node 301D. The first acquisition IC, second acquisition IC, third acquisition IC and fourth acquisition IC of the respective processor nodes may be connected via a ring network. Embodiments may be particularly well suited where a ring network is used to connect plural processor nodes, due to the ease with which modifications may be made to the ECaMS if desired to accommodate changes in requirements and the robustness of the ring network in cases of node/connection failure.

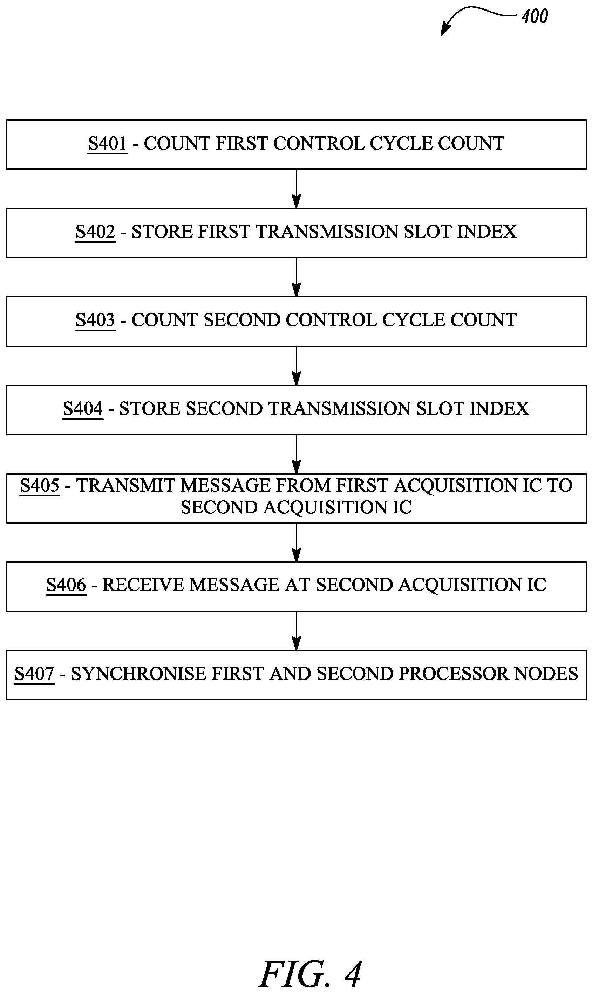

A flowchart illustrating a method in accordance with embodiments is shown in **Figure 4****.** The Figure 4 method is used for ECaMS having a first processor node and a second processor node. The first processor node comprises a first acquisition integrated circuit (IC), a first output IC, and a first processor. The second processor node comprises a second acquisition IC, a second output IC, and a second processor. The first acquisition IC is connected directly to the second acquisition IC.

As shown in S401 of Figure 4, the method comprises counting, at the first acquisition IC (in the first processor node) a first control cycle count. Typically, when the acquisition IC is activated (which may coincide with the activation/resetting of the processor node in which the acquisition IC is located), the acquisition IC begins counting control cycles; this value is a control cycle count. A control cycle may be a loop (such as a software loop) in which a processor acquires, processes and responds. The exact duration of control cycles for a given acquisition IC may vary between embodiments, and may be determined by the specific needs of the acquisition IC/processor node/ECaMS in which the acquisition IC is located. For example, a processor in an electronic engine controller may use twenty five millisecond control loops to acquire, process and respond. The method further comprises storing a first transmission slot index, also at the first acquisition IC, as shown in S402 of Figure 4. A transmission slot index is a count of how many messages have been sent so far within a control cycle. There are multiple transmission slots within a control cycle and so this may provide greater fidelity for time synchronisation. Consequently, the transmission slot index is essentially a message counter.

Equivalently to S401 and S402, the second acquisition IC counts a second control cycle count (see S403) and stores a second transmission slot index (see S404). As shown in S405 of Figure 4, the method further comprises transmitting a message from the first acquisition IC to the second acquisition IC, the message including the first control cycle count and the first transmission slot index. Typically, when one of the processor nodes sends a message to another of the processor nodes within the ECaMS, the sending processor node includes its control cycle count and transmission slot index; by way of example, if the second processor node were to send a message (for example, to the first processor node or to a third processor node), the message may include the second control cycle count and second transmission slot index. Subsequently, as shown in S406, the second acquisition IC receives the message (including the first control cycle count and the first transmission slot index). The second acquisition IC then synchronises the first and second processor nodes, using the first control cycle count, second control cycle count; first transmission slot index and second transmission slot index, as shown in S407 of Figure 4.

In some embodiments, the ECaMS may comprise further processor nodes and/or extension nodes; each of the further processor node/extension nodes may count control cycles and store transmission slot indexes as discussed above with reference to the first and second processor nodes. By way of example, in some embodiments, the ECaMS may further comprise a third processor node and a fourth processor node, comprising a third acquisition IC and a fourth acquisition IC respectively. In some embodiments, the first, second, third and fourth acquisition ICs may be connected via a ring network that may be used to transmit messages between the processor nodes, for example, between the first processor node and the second processor node; an ECaMS utilising a ring network in accordance with embodiments is shown in Figure 3.

The additional processor nodes/extension nodes may perfom processes including counting control cycles and storing transmission slot indexes, equivalently to the processes discussed above. Continuing with the example embodiment discussed above in which the ECaMS comprises third and fourth processor nodes, each of the acquisition ICs may count a control cycle count and store a transmission slot index and, in a clockwise operating mode, messages comprising the control cycle count and transmission slot index may be sent from the first acquisition IC to the second acquisition IC, from the second acquisition IC to the third acquisition IC, from the third acquisition IC to the fourth acquisition IC and potentially from the fourth acquisition IC to the first acquisition IC. In embodiments in which the ring network is a dual ring network comprising a clockwise ring and anticlockwise ring, in an anticlockwise operating mode, messages comprising the control cycle count and transmission slot index may be sent from the fourth acquisition IC to the third acquisition IC, from the third acquisition IC to the second acquisition IC, from the second acquisition IC to the first acquisition IC and potentially from the first acquisition IC to the fourth acquisition IC. Use of a dual ring network may provide an additional level of robustness to connection failures, allowing communications between nodes to be switched from a ring experiencing an issue to the other ring. Further, if a node within the ring becomes unavailable, communications may still be routed to every other node within the ring if a dual ring network is used. In some embodiments, a system (such as a fault integrator scheme) may be used to ensure that repeated switches between a clockwise ring and anticlockwise ring are avoided; the system may be configured to prevent switches between the rings within a given time interval of a previous switch. Systems may be further configured, if repeated switches are occurring, to prevent further switches or trigger a system diagnostic.

As discussed above, messages may be sent between processor nodes where the messages include the (sending node) control cycle counts and transmission slot indexes. In embodiments wherein the ECaMS includes a dual ring network that may operate in clockwise operating mode and anticlockwise operating mode, switching between the clockwise and anticlockwise operating modes may be performed when one or more criteria are satisfied. The one or more criteria used may be determined dependent on the specific configuration of the ECaMS. By way of example, the criteria may include a delay between received messages from a processor node exceeding a predetermined time threshold, and/or a fault being detected in a processor node, and/or randomised content being identified in received messages (also referred to as babbling).

In some embodiments, the synchronisation of the processor node that receives the message with the processor node that sends the message may comprise comparing one or both of the control cycle counts of the processor nodes and the transmission slot indexes of the processor nodes. Continuing with the situation in which a message is sent from the first acquisition IC (of the first processor node) to the second acquisition IC (of the second processor node), the synchronisation may comprise comparing at the second processor node the first control cycle count received from the first processor node with the second control cycle count counted at the second processor node. Following the comparison, in some embodiments adjustments may be made to one or both of the control cycle count and transmission slot index at the receiving processor node, based on the comparison. If a mismatch is found between the transmission slot index or the control cycle then the received data may be ignored because the received data was not acquired within a suitable time period to be acted upon. The counters may then be changed based on the logic to synchronise that particular node with the previous node (the transmission slot index and control cycle count may be considered as being used as relative time stamps).

Continuing with the example embodiment in which the first processor node sends the message and the second processor node receives the message, if the first control cycle count is greater than the second control cycle count, the second control cycle count may be adjusted to match the first control cycle count and the second transmission slot index may be adjusted to match the first transmission slot index. Additionally or alternatively, if the first control cycle count is equal to the second control cycle count, the first and second transmission slot indexes may be compared. If the first transmission slot index is higher than the second transmission slot index, the second transmission slot index may be adjusted to match the first transmission slot index. Alternatively, if the first transmission slot index is not higher than the second transmission slot index, the second transmission slot index may remain unadjusted.

Still continuing with the example embodiment in which the first processor node sends the message and the second processor node receives the message, if the first control cycle count is less than than the second control cycle count, the second control cycle count may remain unadjusted and the second transmission slot index may remain unadjusted.

In some embodiments, the control cycle counts and transmission indexes of some or all of the acquisition ICs in an ECaMS may be set to zero. Examples of situations where the control cycle counts and transmission indexes may be set to zero may include the resetting of the entire ECaMS (in which case the control cycle counts and transmission indexes of all the processor nodes may be set to zero), or the resetting of a subset of the processor nodes (in which case the control cycle counts and transmission indexes only the processor nodes that are reset may be set to zero, or the control cycle counts and transmission indexes of all the processor nodes may be set to zero). In some embodiments, the ECaMS may be reset on activation; the ECaMS activation may be triggered by way of example by the activation of an engine on which the ECaMS is mounted, by the activation of a vehicle comprising the ECaMS, and/or by another trigger. Additionally or alternatively, the ECaMS or a subset of the ECaMS processor nodes may be reset in the event of a processing issue in the ECaMS.

Typically, methods in accordance with embodiments may be performed on ECaMS that has already been in operation or are currently in operation, potentially while the ECaMS is installed on an engine. The type of engine may include, for example, an aeronautical gas turbine engine, a marine diesel engine; an automotive petrol engine; or a marine gas turbine engine.

In some embodiments, ECaMS may be modified before or after installation on an engine by the addition of one or more expansion units, wherein expansion unit acquisition ICs may be connected to one or more acquisition ICs within processor nodes of the ECaMS. Where expansion units are added to an ECaMS, the expansion units may count control cycle counts and store transmission slot indexes, or the expansion units may use control cycle counts and transmission slot indexes of processor nodes to which they are connected.

In some embodiments, at least one processor node of the ECaMS may be configured to receive sensor data generated by at least one sensor, and to transmit data packets via the ring network; in this way the sensor data may be made available throughout the processor nodes forming the ECaMS. The at least one sensor may form part of the ECaMS, may be separate from but connected to the ECaMS, or may be a mixture of sensors forming part of the ECaMS and separate sensors. In some embodiments, the method may further comprise connecting the expansion unit to at least one sensor unit such that, in use, the expansion unit is configured to receive sensor data from the at least one sensor unit. Where the expansion unit is connected to at least one sensor unit, the expansion unit may be further configured to to receive sensor data generated by the at least one sensor unit, and to transmit data packets to the processor nodes of the ECaMS (for example, using a ring network where one is present).

Where the data packets are transmitted between processor nodes using the ring network, the processor node that initially transmits the data packets using the ring network may be configured to include a node identifier in the data packets, wherein the node identifier may indicate that the packets have originated from (as in, have been initially transmitted into the ring network) by that processor node. Use of node identifiers in this way may allow data packets containing errors to be traced to a processor node, such that the source of the errors may potentially be detected and rectified (the rectification may include the resetting of the processor node as discussed above). In embodiments where expansion unit(s) receive sensor data, a processor node connected to the expansion unit may be configured to include a node identifier of itself in the data packets.

Use of of node identifiers as discussed above may also help prevent data contention. In some embodiments, at least one processor node within the ECaMS (potentially all of the processor nodes) may be configured, when receiving one or more data packets via the ring network, to determine whether the one or more data packets include the node identifier of that node. Where a processor node detects a node identifier for itself, the processor node may be further configured to delete the data packets including said node identifier. Alternatively, where a processor node determines that the one or more data packets do not include the node identifier, or include a node identifier for another processor node, the processor node may be further configured to retransmit the data packets. By selectively deleting data packets in this way, old data (that has already circled around the ring network) may be eliminated to avoid data packets endlessly looping through the ring network and band contention may thereby be avoided.

In some embodiments, the processor nodes of the ECaMS may be divided into at least a first portion and a second portion (each portion comprising at least one processor node); where the ECaMS comprises only two processor nodes, the portions may comprise a single one of these two processor nodes each. Where the ECaMS comprises more than two processor node, the processor nodes may be divided between the two portions. Typically, although not exclusively, the processor nodes may be divided approximately equally between the two portions, by way of example, where the ECaMS comprises four processor nodes, two of the processor nodes may be included in each of the two portions. A first portion of the processor nodes may be used to provide control functionality, while a second portion of the processor nodes may be used to provide protection functionality. Control functions may include, for example, VSV (variable stator vane) actuator control, engine igniter control, fuel control, and so on. Protection functions may include, for example, engine surge prevention, flame out prevention, and so on. As discussed above, for some ECaMS applications (such as aeronautical engines) it is desired to provide segregation between control and protection functions, such that any potential errors or failures in control systems do not impact safety critical protection functions. The segregation between the two functions means that interactions between the two functions are kept to a minimum; by way of example, the only signals that may cross partitions between control and protection functions may be power and communication signals between processors (and these signals may be carefully regulated to avoid any error or failure propagation between systems).

Where segregation between portions of processor nodes of an ECaMS is used, the output ICs of processor nodes within a portion may communicate with one another; however as discussed above the processors of the processor nodes may not communicate directly. The limited signalling that passes between portions (that is limited processor communications) may pass via the acquisition ICs. In some embodiments, where the processor nodes are segregated into two or more portions, any expansion units connected to the ECaMS will typically be connected to only one of the portions, that is, will not simultaneously be connected to plural portions. In this way, expansion units may be connected in a way that does not interfere with segregation.

In some embodiments, the ICs in the processor nodes and in the expansion units (that is, the acquisition ICs and output ICs) may be Field Programmable Gate Arrays (FPGAs). FPGAs may be particularly well suited to use in the ECaMS units. Other forms of IC such as Application Specific Integrated Circuits (ASICs), System on a Chips (SoCs), Complex Programmable Logic Devices (CPLDs) and Application Specific Standard Products (ASSPs) may additionally or alternatively be used. In some embodiments, different processor nodes within ECaMS may use different types of ICs; the choice of IC(s) used may be primarily determined based on the specific needs of the system.

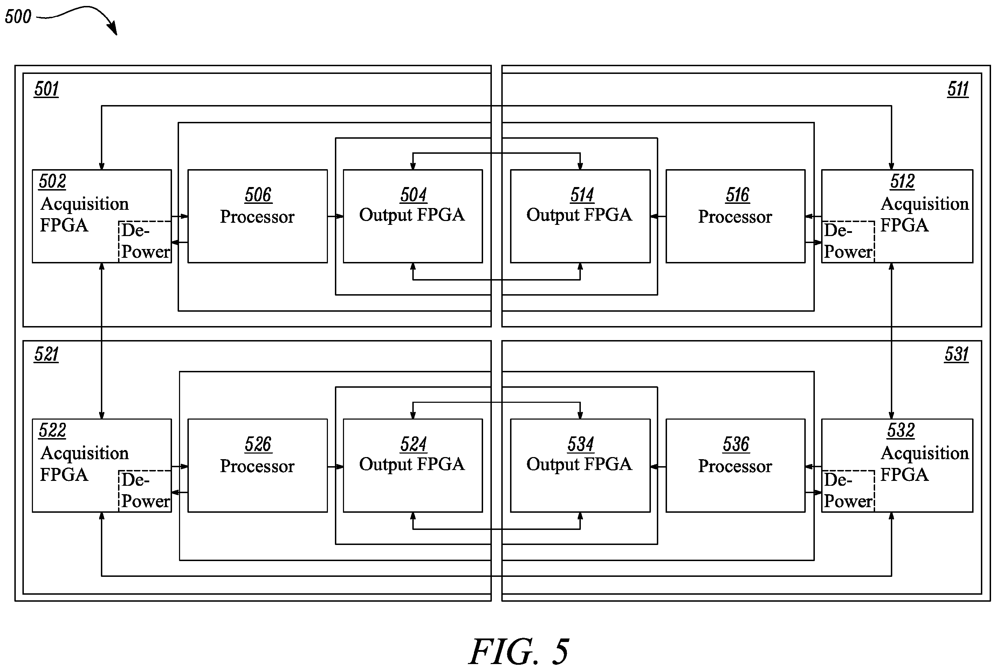

**Figure 5** is a schematic diagram of connections within an example ECaMS in accordance with embodiments. The ECaMS shown in Figure 5 includes 4 processor nodes, each of which has an acquisition IC, processor and output IC. The ECaMS includes processor nodes 501, 511, 521 and 531. The acquisition ICs in the Figure 5 ECaMS are 502, 512, 522 and 532. The processors in the Figure 5 ECaMS are 506, 516, 526 and 536. The output ICs in the Figure 5 ECaMS are 504, 514, 524 and 534. All of the ICs shown in the Figure 5 example are FPGAs.

In the ECaMS shown in Figure 5, the processor nodes are divided into two portions, with processor nodes 501 and 511 used to provide control functionality (thereby defining the first, control, portion), and processor nodes 521 and 531 used to provide protection functionality (thereby defining a second, protection, portion). Where segregation of control and protection functions is desired, separate communication channels may be used for the two functions, with only power and communication signals between processors crossing the segregation between functions. The communication signals may be messages including the sending processor node control cycle count and transmission slot index, as discussed herein. The FPGAs may be used to acquire signals or provide sensor excitations or switching output states on demand from the processor. As shown in Figure 5, the connections between processor nodes are via the acquisition ICs, and there are also connections between output ICs within (rather than between) the two portions. The processors 506, 516, 526 and 536 are only connected to other components within the processor nodes.

Through synchronising processing nodes within ECaMS together, the relevancy of data received by the node may be more effectively established. It is necessary for some control laws that may be implemented by ECaMS for the relative timing of signals (potentially including sensor readings) to be established; for example, to determine whether a particular monitored quantity is increasing or decreasing. By using synchronisation methods in accordance with embodiments, use of a single main clock source (which may be a single source of failure) may be avoided. Further, the use of complicated arrays of redundant clock sources may also be avoided. Also, embodiments may perform synchorinisation checks when a message containing a sending processor node control cycle count and transmission slot index are received, thereby ensuring that the mutual synchronisation of the processing nodes may be maintained and synchronisation drift may be avoided.

## Claims

1. A synchronisation method (400) for synchronising processor nodes of an Engine Control and Monitoring System (100, 225, 300, 500), ECaMS, for an engine (200), the method comprising:
counting (S401), at a first acquisition integrated circuit (102A) in a first processor node (101A, 301A) of the ECaMS, a first control cycle count;
storing (S402), at the first acquisition integrated circuit (102A), a first transmission slot index;
counting (S403), at a second acquisition integrated circuit (102B) in a second processor node (101B, 301B) of the ECaMS, a second control cycle count;
storing (S404), at the second acquisition integrated circuit (102B), a second transmission slot index;
transmitting (S405) a message from the first acquisition integrated circuit (102A) to the second acquisition integrated circuit (102B), the message including the first control cycle count and the first transmission slot index;
receiving (S406) the message at the second acquisition integrated circuit (102B); and
synchronising (S407) the first processor node (101A, 301A) and the second processor node (101B) using the first control cycle count, second control cycle count; first transmission slot index and second transmission slot index,
wherein a transmission slot index is a count of how many messages have been sent so far within a control cycle, and
wherein a control cycle is a loop in which a processor acquires, processes and responds.

2. The method of claim 1 wherein the synchronising of the first processor node (101A, 301A) and the second processor node (101B, 301B) comprises, at the second processor node (101B, 301B), comparing the first control cycle count received from the first processor node (101A, 301A) with the second control cycle count counted at the second processor node (101B, 301B).

3. The method of claim 2 wherein, if the first control cycle count is greater than the second control cycle count, the second control cycle count is adjusted to match the first control cycle count and the second transmission slot index is adjusted to match the first transmission slot index.

4. The method of any of claims 2 and 3 wherein if the first control cycle count is equal to the second control cycle count, the first transmission slot index is compared to the second transmission slot index, and:
if the first transmission slot index is higher than the second transmission slot index, the second transmission slot index is adjusted to match the first transmission slot index; or
if the first transmission slot index is not higher than the second transmission slot index, the second transmission slot index is not adjusted.

5. The method of any of claims 2 to 4 wherein, if the first control cycle count is less than the second control cycle count, the second control cycle count is not adjusted and the second transmission slot index is not adjusted.

6. The method of any preceding claim wherein the ECaMS further comprises a third processor node (301C) and a fourth processor node (301D): the third processor node (301C) comprising a third acquisition integrated circuit; and the fourth processor node (301D) comprising a fourth acquisition integrated circuit, wherein the first acquisition integrated circuit, second acquisition integrated circuit, third acquisition integrated circuit and fourth acquisition integrated circuit are connected via a ring network, wherein the ring network is used to transmit the message from the first processor node (301A) to the second processor node (301B).

7. The method of claim 6 wherein each of the acquisition integrated circuits counts a control cycle count and stores a transmission slot index and, in a clockwise operating mode, messages comprising the control cycle count and transmission slot index are sent from the first acquisition integrated circuit (102A) to the second acquisition integrated circuit (102B), from the second acquisition integrated circuit to the third acquisition integrated circuit, from the third acquisition integrated circuit to the fourth acquisition integrated circuit and, optionally, from the fourth acquisition integrated circuit to the first acquisition integrated circuit.

8. The method of claim 7, wherein the ring network is a dual ring network comprising a clockwise ring and anticlockwise ring and wherein, in an anticlockwise operating mode, messages comprising the control cycle count and transmission slot index are sent from the fourth acquisition integrated circuit to the third acquisition integrated circuit, from the third acquisition integrated circuit to the second acquisition integrated circuit, from the second acquisition integrated circuit to the first acquisition integrated circuit and, optionally, from the first acquisition integrated circuit to the fourth acquisition integrated circuit.

9. The method of claim 8 wherein the ECaMS is further configured to switch between clockwise operating mode and anticlockwise operating mode when one or more criteria are satisfied.

10. The method of claim 9 wherein the one or more criteria comprise:
a delay between received messages exceeding a predetermined time threshold; and/or
detection of a fault in a processor node; and/or
identification of received messages containing randomised content.

11. The method of any preceding claim, wherein the control cycle counts and transmission slot indexes of the acquisition integrated circuits are set to zero when the ECaMS is reset.

12. The method of claim 11, wherein the ECaMS is reset on activation and/or in the event of a processing issue in the ECaMS.

13. The method of any preceding claim, wherein the ECaMS is an Electrical Engine Controller, EEC.

14. The method of claim 13, wherein a first portion of the processor nodes comprising at least one processor node provides control functionality, and a second portion of the processor nodes comprising at least one processor node provides protection functionality.

15. An engine control and monitoring system (100, 225, 300, 500) comprising:
a first processor node (101A) including a first acquisition integrated circuit (102A), a first output integrated circuit (104A) and a first processor (106A);
a second processor node (101B) including a second acquisition integrated circuit (102B), a second output integrated circuit (104B) and a second processor (106B),
wherein the engine control and monitoring system (100, 225, 300, 500) is configured to perform the method as claimed in any of claims 1 to 5.

## Patentansprüche

1. Synchronisationsverfahren (400) zum Synchronisieren von Prozessorknoten eines Motorsteuerungs- und -überwachungssystems (100, 225, 300, 500), ECaMS, für einen Motor (200), wobei das Verfahren Folgendes umfasst:
Zählen (S401) einer ersten Steuerzykluszählung an einer ersten integrierten Erfassungsschaltung (102A) in einem ersten Prozessorknoten (101A, 301A) des ECaMS;
Speichern (S402) eines ersten Übertragungsslotindex an der ersten integrierten Erfassungsschaltung (102A);
Zählen (S403) einer zweiten Steuerzykluszählung an einer zweiten integrierten Erfassungsschaltung (102B) in einem zweiten Prozessorknoten (101B, 301B) des ECaMS,
Speichern (S404) eines zweiten Übertragungsslotindex an der zweiten integrierten Erfassungsschaltung (102B);
Übertragen (S405) einer Nachricht von der ersten integrierten Erfassungsschaltung (102A) an die zweite integrierte Erfassungsschaltung (102B), wobei die Nachricht die erste Steuerzykluszählung und den ersten Übertragungsslotindex einschließt;
Empfangen (S406) der Nachricht an der zweiten integrierten Erfassungsschaltung (102B); und
Synchronisieren (S407) des ersten Prozessorknotens (101A, 301A) und des zweiten Prozessorknotens (101B) unter Verwendung der ersten Steuerzykluszählung, der zweiten Steuerzykluszählung; des ersten Übertragungsslotindex und des zweiten Übertragungsslotindex,
wobei ein Übertragungsslotindex eine Zählung dessen ist, wie viele Nachrichten bisher innerhalb eines Steuerzyklus gesendet wurden, und
wobei ein Steuerzyklus eine Schleife ist, in der ein Prozessor erfasst, verarbeitet und reagiert.

2. Verfahren nach Anspruch 1, wobei das Synchronisieren des ersten Prozessorknotens (101A, 301A) und des zweiten Prozessorknotens (101B, 301B) an dem zweiten Prozessorknoten (101B, 301B) Vergleichen der ersten Steuerzykluszählung, die von dem ersten Prozessorknoten (101A, 301A) empfangen wird, mit der zweiten Steuerzykluszählung, die an dem zweiten Prozessorknoten (101B, 301B) gezählt wird, umfasst.

3. Verfahren nach Anspruch 2, wobei, falls die erste Steuerzykluszählung größer als die zweite Steuerzykluszählung ist, die zweite Steuerzykluszählung angepasst wird, damit sie mit der ersten Steuerzykluszählung übereinstimmt, und der zweite Übertragungsslotindex angepasst wird, damit er mit dem ersten Übertragungsslotindex übereinstimmt.

4. Verfahren nach einem der Ansprüche 2 und 3, wobei, falls die erste Steuerzykluszählung gleich der zweiten Steuerzykluszählung ist, der erste Übertragungsslotindex mit dem zweiten Übertragungsslotindex verglichen wird, und:
falls der erste Übertragungsslotindex höher als der zweite Übertragungsslotindex ist, der zweite Übertragungsslotindex angepasst wird, damit er mit dem ersten Übertragungsslotindex übereinstimmt; oder
falls der erste Übertragungsslotindex nicht höher als der zweite Übertragungsslotindex ist, der zweite Übertragungsslotindex nicht angepasst wird.

5. Verfahren nach einem der Ansprüche 2 bis 4, wobei, falls die erste Steuerzykluszählung kleiner als die zweite Steuerzykluszählung ist, die zweite Steuerzykluszählung nicht angepasst wird und der zweite Übertragungsslotindex nicht angepasst wird.

6. Verfahren nach einem vorhergehenden Anspruch, wobei das ECaMS ferner einen dritten Prozessorknoten (301C) und einen vierten Prozessorknoten (301D) umfasst: wobei der dritte Prozessorknoten (301C) eine dritte integrierte Erfassungsschaltung umfasst; und wobei der vierte Prozessorknoten (301D) eine vierte integrierte Erfassungsschaltung umfasst, wobei die erste integrierte Erfassungsschaltung, die zweite integrierte Erfassungsschaltung, die dritte integrierte Erfassungsschaltung und die vierte integrierte Erfassungsschaltung über ein Ringnetz verbunden sind, wobei das Ringnetz verwendet wird, um die Nachricht von dem ersten Prozessorknoten (301A) an den zweiten Prozessorknoten (301B) zu übertragen.

7. Verfahren nach Anspruch 6, wobei jede der integrierten Erfassungsschaltungen eine Steuerzykluszählung zählt und einen Übertragungsslotindex speichert und in einem Betriebsmodus im Uhrzeigersinn Nachrichten, die die Steuerzykluszählung und den Übertragungsslotindex umfassen, von der ersten integrierten Erfassungsschaltung (102A) an die zweite integrierte Erfassungsschaltung (102B), von der zweiten integrierten Erfassungsschaltung an die dritte integrierte Erfassungsschaltung, von der dritten integrierten Erfassungsschaltung an die vierte integrierte Erfassungsschaltung und optional von der vierten integrierten Erfassungsschaltung an die erste integrierte Erfassungsschaltung gesendet werden.

8. Verfahren nach Anspruch 7, wobei das Ringnetz ein Doppelringnetz ist, das einen Ring im Uhrzeigersinn und einen Ring gegen den Uhrzeigersinn umfasst, und wobei in einem Betriebsmodus gegen den Uhrzeigersinn Nachrichten, die die Steuerzykluszählung und den Übertragungsslotindex umfassen, von der vierten integrierten Erfassungsschaltung an die dritte integrierte Erfassungsschaltung, von der dritten integrierten Erfassungsschaltung an die zweite integrierte Erfassungsschaltung, von der zweiten integrierten Erfassungsschaltung an die erste integrierte Erfassungsschaltung und optional von der ersten integrierten Erfassungsschaltung an die vierte integrierte Erfassungsschaltung gesendet werden.

9. Verfahren nach Anspruch 8, wobei das ECaMS ferner dazu konfiguriert ist, zwischen einem Betriebsmodus im Uhrzeigersinn und einem Betriebsmodus gegen den Uhrzeigersinn umzuschalten, wenn ein oder mehrere Kriterien erfüllt sind.

10. Verfahren nach Anspruch 9, wobei das eine oder die mehreren Kriterien Folgendes umfassen:
eine Verzögerung zwischen empfangenen Nachrichten, die einen vorbestimmten Zeitschwellenwert übersteigt; und/oder
Detektion eines Fehlers in einem Prozessorknoten; und/oder
Identifizierung von empfangenen Nachrichten, die randomisierten Inhalt enthalten.

11. Verfahren nach einem vorhergehenden Anspruch, wobei die Steuerzykluszählungen und Übertragungsslotindizes der integrierten Erfassungsschaltungen auf null gesetzt werden, wenn das ECaMS zurückgesetzt wird.

12. Verfahren nach Anspruch 11, wobei das ECaMS bei Aktivierung und/oder im Falle eines Verarbeitungsproblems in dem ECaMS zurückgesetzt wird.

13. Verfahren nach einem vorhergehenden Anspruch, wobei das ECaMS eine elektrische Motorsteuervorrichtung, EEC, ist.

14. Verfahren nach Anspruch 13, wobei ein erster Abschnitt der Prozessorknoten, der mindestens einen Prozessorknoten umfasst, eine Steuerfunktionalität bereitstellt und ein zweiter Abschnitt der Prozessorknoten, der mindestens einen Prozessorknoten umfasst, eine Schutzfunktionalität bereitstellt.

15. Motorsteuerungs- und -überwachungssystem (100, 225, 300, 500), umfassend:
einen ersten Prozessorknoten (101A), der eine erste integrierte Erfassungsschaltung (102A), eine erste integrierte Ausgangsschaltung (104A) und einen ersten Prozessor (106A) einschließt;
einen zweiten Prozessorknoten (101B), der eine zweite integrierte Erfassungsschaltung (102B), eine zweite integrierte Ausgangsschaltung (104B) und einen zweiten Prozessor (106B) einschließt,
wobei das Motorsteuerungs- und -überwachungssystem (100, 225, 300, 500) dazu konfiguriert ist, das Verfahren nach einem der Ansprüche 1 bis 5 durchzuführen.

## Revendications

1. Procédé de synchronisation (400) pour synchroniser des nœuds de processeur d'un système de commande et de surveillance de moteur (100, 225, 300, 500), ECaMS, pour un moteur (200), le procédé comprenant :
le comptage (S401), au niveau d'un premier circuit intégré d'acquisition (102A) dans un premier nœud de processeur (101A, 301A) de l'ECaMS, d'un premier nombre de cycles de commande ;
le stockage (S402), au niveau du premier circuit intégré d'acquisition (102A), d'un premier indice de créneau de transmission ;
le comptage (S403), au niveau d'un deuxième circuit intégré d'acquisition (102B) dans un deuxième nœud de processeur (101B, 301B) de l'ECaMS, d'un second nombre de cycles de commande ;
le stockage (S404), au niveau du deuxième circuit intégré d'acquisition (102B), d'un second indice de créneau de transmission ;
la transmission (S405) d'un message en provenance du premier circuit intégré d'acquisition (102A) au deuxième circuit intégré d'acquisition (102B), le message comprenant le premier nombre de cycles de commande et le premier indice de créneau de transmission ;
la réception (S406) du message au niveau du deuxième circuit intégré d'acquisition (102B) ; et
la synchronisation (S407) du premier nœud de processeur (101A, 301A) et du deuxième nœud de processeur (101B) en utilisant le premier nombre de cycles de commande, le second nombre de cycles de commande ; le premier indice de créneau de transmission et le second indice de créneau de transmission,
dans lequel un indice de créneau de transmission est un nombre indiquant combien de messages ont été envoyés jusque là au cours d'un cycle de commande, et
dans lequel un cycle de commande est une boucle dans laquelle un processeur acquiert, traite et répond.

2. Procédé de la revendication 1, dans lequel la synchronisation du premier nœud de processeur (101A, 301A) et du deuxième nœud de processeur (101B, 301B) comprend, au niveau du deuxième nœud de processeur (101B, 301B), la comparaison du premier nombre de cycles de commande reçu du premier nœud de processeur (101A, 301A) au second nombre de cycles de commande compté au niveau du deuxième nœud de processeur (101B, 301B).

3. Procédé de la revendication 2, dans lequel, si le premier nombre de cycle de commande est supérieur au second nombre de cycles de commande, le second nombre de cycles de commande est ajusté pour correspondre au premier nombre de cycles de commande et le second indice de créneau de transmission est ajusté pour correspondre au premier indice de créneau de transmission.

4. Procédé de l'une quelconque des revendications 2 et 3, dans lequel si le premier nombre de cycles de commande est égal au second nombre de cycles de commande, le premier indice de créneau de transmission est comparé au second indice de créneau de transmission, et :
si le premier indice de créneau de transmission est supérieur au second indice de créneau de transmission, le second indice de créneau de transmission est ajusté pour correspondre au premier indice de créneau de transmission ; ou
si le premier indice de créneau de transmission n'est pas supérieur au second indice de créneau de transmission, le second indice de créneau de transmission n'est pas ajusté.

5. Procédé de l'une quelconque des revendications 2 à 4, dans lequel, si le premier nombre de cycles de commande est inférieur au second nombre de cycles de commande, le second nombre de cycles de commande n'est pas ajusté et le second indice de créneau de transmission n'est pas ajusté.

6. Procédé de l'une quelconque des revendications précédentes, dans lequel l'ECaMS comprend en outre un troisième nœud de processeur (301C) et un quatrième nœud de processeur (301D) : le troisième nœud de processeur (301C) comprenant un troisième circuit intégré d'acquisition ; et le quatrième nœud de processeur (301D) comprenant un quatrième circuit intégré d'acquisition, dans lequel le premier circuit intégré d'acquisition, le deuxième circuit intégré d'acquisition, le troisième circuit intégré d'acquisition et le quatrième circuit intégré d'acquisition sont connectés via un réseau en anneau, dans lequel le réseau en anneau est utilisé pour transmettre le message du premier nœud de processeur (301A) au deuxième nœud de processeur (301B).

7. Procédé de la revendication 6, dans lequel chacun des circuits intégrés d'acquisition compte un nombre de cycles de commande et stocke un indice de créneau de transmission et, dans un mode de fonctionnement dans le sens horaire, des messages comprenant le nombre de cycles de commande et l'indice de créneau de transmission sont envoyés du premier circuit intégré d'acquisition (102A) au deuxième circuit intégré d'acquisition (102B), du deuxième circuit intégré d'acquisition au troisième circuit intégré d'acquisition, du troisième circuit intégré d'acquisition au quatrième circuit intégré d'acquisition et, éventuellement, du quatrième circuit intégré d'acquisition au premier circuit intégré d'acquisition.

8. Procédé de la revendication 7, dans lequel le réseau en anneau est un réseau à doubles anneaux comprenant un anneau dans le sens horaire et un anneau dans le sens antihoraire et dans lequel, dans un mode de fonctionnement dans le sens antihoraire, des messages comprenant le nombre de cycles de commande et l'indice de créneau de transmission sont envoyés du quatrième circuit intégré d'acquisition au troisième circuit intégré d'acquisition, du troisième circuit intégré d'acquisition au deuxième circuit intégré d'acquisition, du deuxième circuit intégré d'acquisition au premier circuit intégré d'acquisition et, éventuellement, du premier circuit intégré d'acquisition au quatrième circuit intégré d'acquisition.

9. Procédé de la revendication 8, dans lequel l'ECaMS est en outre configuré pour commuter entre le mode de fonctionnement dans le sens horaire et le mode de fonctionnement dans le sens antihoraire lorsqu'un ou plusieurs critères sont satisfaits.

10. Procédé de la revendication 9, dans lequel l'un ou plusieurs critères comprennent :
le fait qu'un retard entre les messages reçus dépasse un seuil de temps prédéterminé ; et/ou
la détection d'un défaut dans un nœud de processeur ; et/ou
l'identification des messages reçus contenant un contenu randomisé.

11. Procédé de l'une quelconque des revendications précédentes, dans lequel les nombres de cycles de commande et les indices de créneau de transmission des circuits intégrés d'acquisition sont mis à zéro lorsque l'ECaMS est réinitialisé.

12. Procédé de la revendication 11, dans lequel l'ECaMS est réinitialisé lors de l'activation et/ou en cas de problème de traitement dans l'ECaMS.

13. Procédé de l'une quelconque revendication précédente, dans lequel l'ECaMS est un contrôleur de moteur électrique, EEC.

14. Procédé de la revendication 13, dans lequel une première partie des nœuds de processeur comprenant au moins un nœud de processeur fournit une fonctionnalité de commande, et une seconde partie des nœuds de processeur comprenant au moins un nœud de processeur fournit une fonctionnalité de protection.

15. Système de commande et de surveillance de moteur (100, 225, 300, 500) comprenant :
un premier nœud de processeur (101A) comprenant un premier circuit intégré d'acquisition (102A), un premier circuit intégré de sortie (104A) et un premier processeur (106A) ;
un deuxième nœud de processeur (101B) comprenant un deuxième circuit intégré d'acquisition (102B), un deuxième circuit intégré de sortie (104B) et un second processeur (106B),
dans lequel le système de commande et de surveillance de moteur (100, 225, 300, 500) est configuré pour exécuter le procédé selon l'une quelconque des revendications 1 à 5.
